# FASCICULE DE BREVET EUROPEEN

(11) **EP 0 887 260 B1**
(45) Date de publication et mention de la délivrance du brevet: **24.04.2002**
(21) Numéro de dépôt: 98401320.1
(22) Date de dépôt: 03.06.1998
(51) Int. Cl.: B64G 1/50, B64G 1/44

(54) **Satellite à rejet thermique amélioré**
Satellit mit verbesserter Wärmeabgabe
Satellite with enhanced thermal rejection

(30) Priorité: 26.06.1997 FR 9708007
(43) Date de publication de la demande: 30.12.1998
(73) Titulaire: ALCATEL, 75008 Paris (FR)
(72) Inventeur: Bard, Max, 06110 Le Cannet (FR)
(74) Mandataire: Bonnetat, Christian

(56) Documents cités:
- EP-A- 0 132 768
- EP-A- 0 447 049
- FR-A- 2 605 287
- US-A- 3 603 530

## Description

La présente invention concerne les satellites, notamment géostationnaires, et, plus particulièrement, le contrôle thermique desdits satellites.

On sait que les équipements électroniques embarqués à bord des satellites dissipent de l'énergie sous forme thermique. Pour maintenir lesdits équipements dans une plage de température optimale de fonctionnement, il est donc nécessaire d'évacuer, à l'extérieur du satellite, l'énergie thermique excédentaire. On sait de plus qu'une telle évacuation d'énergie thermique est en général obtenue par rayonnement vers l'espace.

Dans le cas d'un satellite, notamment un satellite de télécommunications, comportant une face nord et une face sud, opposées l'une à l'autre et respectivement orthogonales à l'axe des pôles de la Terre, il est usuel que le rayonnement de la chaleur du satellite vers l'espace s'effectue par lesdites faces nord et sud, utilisées en radiateur thermique. Un tel processus d'évacuation de chaleur est avantageux, car lesdites faces nord et sud :
- subissent, sur une période annuelle, un ensoleillement minimal par rapport aux autres faces du satellite ; et
- ont une illumination solaire constante sur une journée, c'est-à-dire sur une révolution, ce qui permet d'éviter des variations de température trop importantes.

Cependant, du fait même de cette illumination solaire qui apporte de l'énergie thermique auxdites faces nord et sud, l'évacuation de chaleur par celles-ci ne peut être optimale et peut même être insuffisante pour assurer auxdits équipements une température de fonctionnement adéquate.

Cet inconvénient est d'autant plus prononcé que généralement, de façon simple et connue, les surfaces radiatives desdites faces nord et sud --surfaces radiatives qui sont la base du contrôle thermique du satellite-- sont assurées par un revêtement réflecteur solaire à forte émissivité infrarouge, du type OSR (Optical Solar Reflector), recouvrant au moins en partie lesdites faces. En effet, un tel revêtement absorbe une partie non négligeable de la puissance solaire incidente et présente donc une capacité de rejet thermique limitée. De plus, les revêtements OSR présentent les inconvénients supplémentaires d'être coûteux et d'être sensibles au vieillissement sous l'effet du rayonnement solaire.

Pour accroître la capacité de rejet thermique d'un satellite, le document EP-A-O 447 049 propose d'utiliser les panneaux solaires eux-mêmes, éventuellement équipés d'écrans auxiliaires, pour porter en permanence leur ombre sur une telle face du satellite, quelle que soit la position du soleil, de sorte que la température de celle-ci est abaissée et que la capacité de rejet thermique de ladite face est accrue. Cependant, une telle réalisation connue oblige à excentrer lesdits panneaux solaires, ce qui soulève des difficultés de commande, d'équilibrage et de rotation desdits panneaux solaires.

La présente invention a pour objet de remédier àcet inconvénient.

A cette fin, selon l'invention, le satellite, notamment géostationnaire, comportant :
- au moins une face utilisée en radiateur thermique pour les équipements embarqués à bord dudit satellite et disposée sur le trajet du rayonnement solaire ;
- au moins un panneau solaire générateur d'électricité, constamment orienté vers le soleil et en saillie par rapport à ladite face ; et
- un écran solidaire dudit panneau solaire, disposé à la périphérie dudit satellite et arrêtant le rayonnement solaire dirigé vers ladite face, est remarquable en ce que :
   - ledit panneau solaire est disposé centralement par rapport à ladite face ; et
   - ledit écran est solidarisé dudit panneau solaire par l'intermédiaire d'un bras.

Bien entendu, la hauteur et la largeur dudit écran, ainsi que sa distance par rapport audit générateur solaire, sont déterminées pour que l'ombre qu'il porte sur ladite face corresponde au moins à la capacité de rejet souhaitée.

Un tel écran peut avoir une forme simple ou un profil optimisé, être d'une seule pièce ou réalisé en plusieurs éléments. Il peut être constitué d'une matière multicouche ou d'une simple peau avec des revêtements externes adéquats, destinés à limiter les effets du soleil sur celui-ci, donc sur les surfaces radiatives, et à augmenter leurs capacités de rejet. Lors de la phase de lancement, l'écran peut être déjà en position opérationnelle ou replié et dans ce cas son déploiement peut être automatique ou commandé.

Il va de soi que la forme de la plate-forme du satellite peut être quelconque, que l'écran peut être au droit, à l'intérieur ou à l'extérieur de celle-ci et qu'il peut également dépasser ou non du satellite.

Un tel bras de liaison entre l'écran et le panneau solaire peut être un composant spécifique ou être intégré au générateur ou à l'écran. Il peut être fixé à n'importe quelle partie du générateur solaire. Cependant, avantageusement, il est solidaire du pied dudit panneau solaire.

Ladite face radiative du satellite peut être plane et recouverte au moins partiellement par un revêtement fortement émissif.

Comme mentionné ci-dessus, une telle face radiative peut être la face nord ou la face sud de la plate-forme dudit satellite.

Les figures du dessin annexé feront bien comprendre comment l'invention peut être réalisée. Sur ces figures, des références identiques désignent des éléments semblables.

La figure 1 illustre un satellite sur son orbite géostationnaire.

Les figures 2 et 3 illustrent schématiquement et partiellement, respectivement en vue de côté et en vue de dessus, un mode de réalisation du satellite conforme à l'invention.

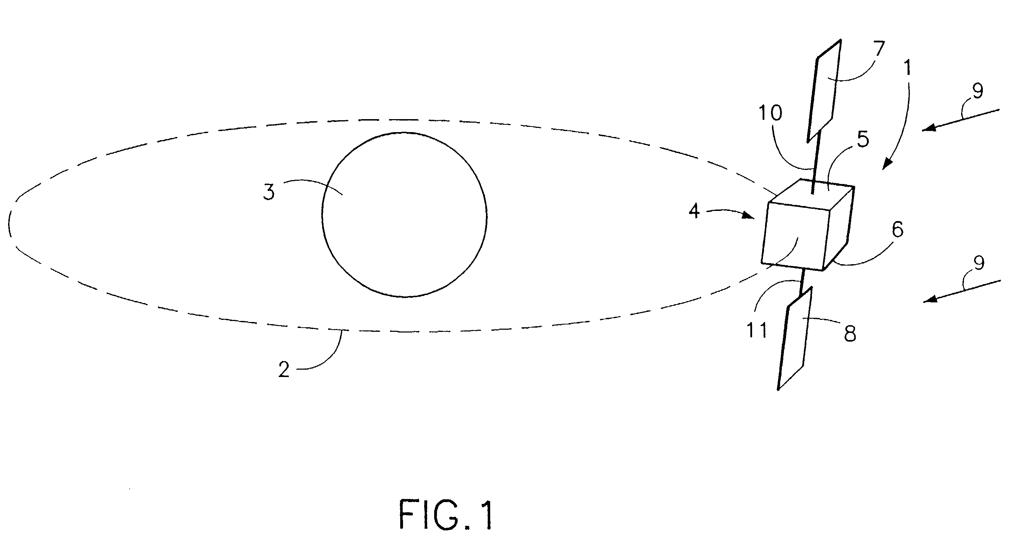

Sur la figure 1, on a représenté schématiquement un satellite géostationnaire 1 sur son orbite 2 autour de la Terre 3. La plate-forme 4 du satellite 1 présente, par exemple, une forme parallélépipédique et elle comporte une face nord 5 et une face sud 6 perpendiculaires à l'axe de pôles de la Terre.

Des panneaux solaires 7 et 8 sont prévus pour alimenter le satellite 1 en énergie électrique et sont en permanence dirigés vers le soleil, dont ils reçoivent le rayonnement 9. Les panneaux solaires 7 et 8 sont disposés centralement en saillie, respectivement par rapport à la face nord 5 et à la face sud 6, par exemple grâce à des pieds 10 ou 11 solidarisant lesdits panneaux 7 et 8 de la plate-forme 4. De façon connue, lesdits pieds 10 et 11 sont articulés pour permettre auxdits panneaux 7 et 8 de prendre une position repliée le long de la plate-forme 4 pendant le lancement du satellite 1 et une position déployée (celle représentée sur la figure 1 et décrite ci-dessus) lorsque ledit satellite est mis sur son orbite 2.

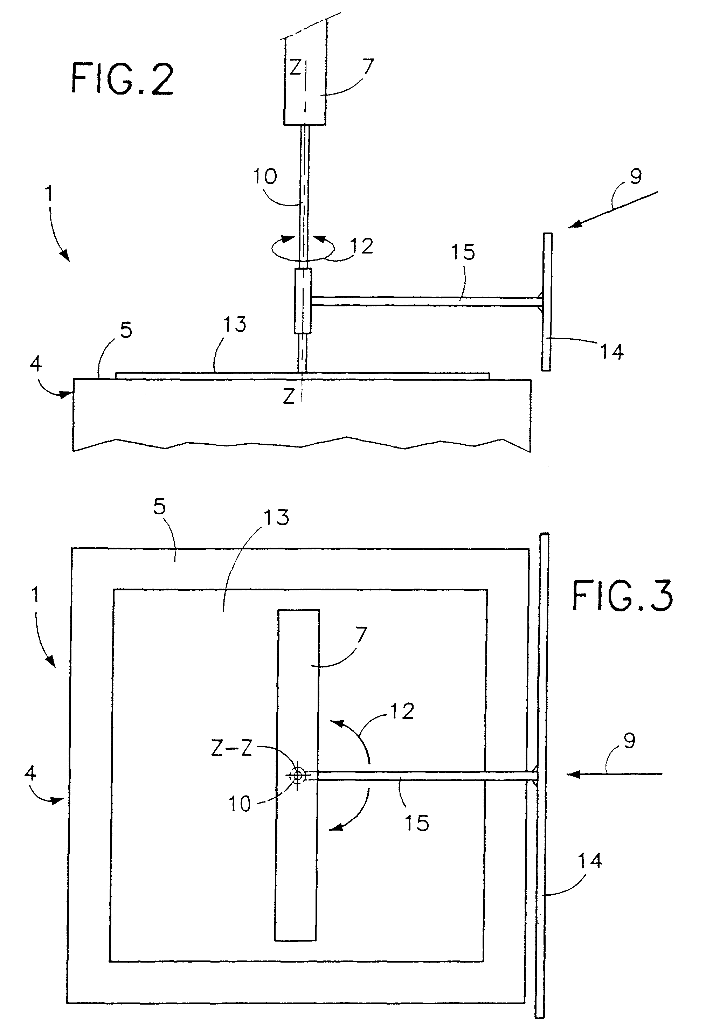

De plus, de façon également connue, les pieds 10 et 11 peuvent tourner autour d'un axe Z-Z (voir les flèches courbes 12 des figures 2 et 3) orthogonal auxdites faces nord et sud 5 et 6, pour que lesdits panneaux solaires 7 et 8 puissent en permanence être orientés vers le soleil (rayonnement 9) sous l'action d'un dispositif d'asservissement de position (connu et non représenté) disposé dans la plate-forme 4.

Le contrôle thermique du satellite 1 est obtenu en utilisant les faces nord et sud 5 et 6 comme radiateurs thermiques, comme cela a été expliqué ci-dessus. A cet effet, ces faces portent un revêtement émissif 13, les recouvrant au moins en partie et formant la surface radiative desdites faces (voir les figures 2 et 3).

Conformément à la présente invention, et comme cela est représenté sur les figures 2 et 3 à propos de la face nord 5, on prévoit un écran 14, disposé à la périphérie de la plate-forme 4 du satellite et disposé sur le trajet du rayonnement solaire 9 pour que son ombre portée sur la face 5 recouvre entièrement celle-ci, ou au moins son revêtement émissif 13.

L'écran 14 est solidarisé du pied 10 du panneau solaire 7 par l'intermédiaire d'un bras 15.

La position et la forme de l'écran 14 sont prévues pour que celui-ci puisse se déplacer en rotation autour de l'axe Z-Z, avec ledit panneau solaire 7, en fonction de l'orientation du rayonnement solaire 9, afin de porter en permanence son ombre sur ladite face 5, ou tout au moins le revêtement 13.

## Revendications

1. Satellite, notamment géostationnaire, comportant :
- au moins une face (5) utilisée en radiateur thermique pour les équipements embarqués à bord dudit satellite (1) et disposée sur le trajet du rayonnement solaire (9) ;
- au moins un panneau solaire (7) générateur d'électricité, constamment orienté vers le soleil et en saillie par rapport à ladite face (5); et
- un écran (14) solidaire dudit panneau solaire (7), disposé à la périphérie dudit satellite et arrêtant le rayonnement solaire (9) dirigé vers ladite face (5),
**caractérisé en ce que** :
- ledit panneau solaire (7) est disposé centralement par rapport à ladite face (5) ; et
- ledit écran (14) est solidarisé dudit panneau solaire (7) par l'intermédiaire d'un bras (15).

2. Satellite selon la revendication 1,
**caractérisé en ce que** ledit bras (15) est solidaire du pied (10) dudit panneau solaire (7).

3. Satellite selon l'une quelconque des revendications 1 ou 2,
**caractérisé en ce que** ladite face (5) est recouverte au moins partiellement par un revêtement à forte émissivité infrarouge (13).

4. Satellite selon l'une quelconque des revendications 1 à 3,
**caractérisé en ce que** ladite face (5) est la face nord de la plate-forme (4) dudit satellite.

5. Satellite selon l'une quelconque des revendications 1 à 3,
**caractérisé en ce que** ladite face est la face sud de la plate-forme (4) dudit satellite.

## Claims

1. A satellite, especially a geostationary satellite, comprising:
- at least one face (5) which is used as a thermal radiator for the equipment carried on board said satellite (1) and is arranged in the path of the solar radiation (9);
- at least one solar panel (7) which is a generator of electricity, which is pointed continuously toward the sun and projects from said face (5); and
- a screen (14) secured to said solar panel (7), arranged at the periphery of said satellite and stopping the solar radiation (9) directed toward said face (5),
**characterized in that**:
- said solar panel (7) is arranged centrally with respect to said face (5); and
- said screen (14) is secured to said solar panel (7) by an arm (15).

2. The satellite as claimed in claim 1,
**characterized in that** said arm (15) is secured to the leg (10) of said solar panel (7).

3. The satellite as claimed in anyone of claims 1 or 2,
**characterized in that** said face (5) is at least partially covered by a coating with high infrared emissivity (13).

4. The satellite as claimed in anyone of claims 1 to 3,
**characterized in that** said face (5) is the north face of the platform, (4) of said satellite.

5. The satellite as claimed in anyone of claims 1 to 3,
**characterized in that** said face is the south face of the platform (4) of said satellite.

## Patentansprüche

1. Satellit, insbesondere geostationärer Satellit, der folgendes umfasst:
- mindestens eine Fläche (5), die als Wärmestrahler für die an Bord des genannten Satelliten (1) untergebrachten Ausrüstungen verwendet wird und auf dem Weg der Sonnenstrahlung (9) angeordnet ist;
- mindestens ein Elektronenergie erzeugendes Solarzellenpanel (7), das ständig auf die Sonne ausgerichtet ist und in Bezug auf die genannte Fläche (5) vorragt; und
- einen Schirm (14), der fest mit dem genannten Solarzellenpanel (7) verbunden und am Umfang des genannten Satelliten angeordnet ist und die auf die genannte Fläche (5) gerichtete Sonnenstrahlung stoppt,
**dadurch gekennzeichnet, dass**:
- das genannte Solarzellenpanel (7) in Bezug auf die genannte Fläche (5) mittig angeordnet ist, und
- der genannte Schirm (14) über einen Arm (15) fest mit dem genannten Solarzellenpanel (7) verbunden ist.

2. Satellit nach Anspruch 1,
**dadurch gekennzeichnet, dass** der genannte Arm (15) fest mit dem Fuß (10) des genannten Solarzellenpanels (7) verbunden ist.

3. Satellit nach einem beliebigen der Ansprüche 1 oder 2,
**dadurch gekennzeichnet, dass** die genannte Fläche (5) zumindest teilweise mit einer Beschichtung mit hohem Infrarot-Abstrahlungsvermögen (13) bedeckt ist.

4. Satellit nach einem beliebigen der Ansprüche 1 bis 3,
**dadurch gekennzeichnet, dass** die genannte Fläche (5) die Nordseite der Plattform (4) des genannten Satelliten ist.

5. Satellit nach einem beliebigen der Ansprüche 1 bis 3,
**dadurch gekennzeichnet, dass** die genannte Fläche die Südseite der Plattform (4) des genannten Satelliten ist.
